(19) Europäisches Patentamt / European Patent Office / Office européen des brevets

(11) **EP 3 392 644 A1**

(12) **EUROPEAN PATENT APPLICATION**

(43) Date of publication:
**24.10.2018 Bulletin 2018/43**

(51) Int Cl.:
**G01N 15/02** (2006.01)  **G01N 21/53** (2006.01)
**G01N 15/14** (2006.01)

(21) Application number: **17167228.0**

(22) Date of filing: **20.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Koninklijke Philips N.V.
5656 AE Eindhoven (NL)**

(72) Inventors:
• ZHANG, Qiu Shi
 **5656 AE Eindhoven (NL)**
• CHEN, Shuang
 **5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **PARTICLE CHARACTERIZATION APPARATUS AND METHOD**

(57)     An apparatus is provided for determining particle characteristics, in which a flow path is generated containing particles to be analyzed. A light detection system detects light received from a measurement zone which has been scattered by the particles. A time duration for which a particle remains in the measurement zone is measured to determine an effective aerodynamic particle diameter and a peak detected received light intensity is measured to determine an effective optical particle diameter. A further particle parameter is also obtained relating to the shape and/or density of the particle.

This approach enables more information than only a particle size to be obtained using a single-stage optical analysis system. The additional information may be used to characterize the particles more accurately.

FIG. 3

EP 3 392 644 A1

**Description**

FIELD OF THE INVENTION

This invention relates to a method and apparatus for characterizing particles.

BACKGROUND OF THE INVENTION

It is well known that it is desirable to monitor pollution levels, such as particulate pollutants. Various sensing devices are known, which for example provide a particle concentration level for particles below a certain size. Optical particle sensing approaches are for example known based on optical scattering.

It is also of interest to know the particle size or particle size distribution of a pollutant for example to identify the pollutant and hence the cause or source of the pollution.

Various particle sizing techniques are known. These techniques aim to measure a particle equivalent diameter, and there are different definitions for this equivalent diameter. For example, a particle optical diameter ($d_{op}$) is an equivalent diameter reported from a Mie light scattering measurement technique. A particle aerodynamic diameter ($d_{ae}$) is the equivalent diameter of a spherical particle with standard density which settles at the same terminal velocity as the particle of interest.

There is a difference between the two diameters, which results from the shape (e.g. spherical vs. non-spherical) and density (as compared to a standard density of $1g/cm^3$) of the particle.

It would be of interest to obtain additional information about the particle characteristics other than a simple equivalent diameter. For example, efforts have been made to measure a sub-micron particle shape factor and density in scientific application scenarios. Typically, two or more equivalent particle diameters are measured by corresponding measurement techniques connected in series along a gas flow. These cumbersome instruments usually require a large space to set up and they require skilled operators.

There is therefore a need for an analysis system which enables more information about particles to be obtained than a simple diameter measurement, but with a low cost and compact arrangement.

SUMMARY OF THE INVENTION

The invention is defined by the claims.

According to examples in accordance with an aspect of the invention, there is provided an apparatus for determining particle characteristics, comprising:

a flow system for generating a flow path between an inlet and an outlet along which an accelerating flow is to be provided containing particles to be analyzed;
a light source for providing light to a measurement zone of the flow path;
a light detector for detecting light received from the measurement zone which has been scattered by the particles; and
a controller for analyzing the detected received light,
wherein the controller is adapted to:

determine a time duration for which a particle remains in the measurement zone, and thereby determine an effective aerodynamic particle diameter;
determine a peak detected received light intensity and thereby determine an effective optical particle diameter;
determine a further particle parameter relating to the shape and/or density of the particle.

This apparatus enables multiple parameters to be obtained about detected particles using a single optical analysis system. In particular, both effective optical and aerodynamic diameters are obtained, as well as further shape or density information. This is possible by making use of a relatively long measurement zone so that particle transit time information is obtained as an additional variable to the light intensity. The use of an accelerating flow contributes to the difference in transit time (i.e. the time the particles are resident in the measurement zone) for particles with different aerodynamic diameters, hence enables particle sizing.

The additional information may be used to determine particle type and composition.

The light source is preferably a laser.

In a basic implementation, the controller may be adapted to determine the further particle parameter as a ratio between a particle shape parameter and a particle density. This ratio may be obtained directly from the two effective particle diameters without any further measurements.

In another implementation, the controller is adapted to:

analyze a level of variation of the detected received intensity over time and thereby derive a particle shape parameter as a first further particle parameter; and

determine a particle density as a second further particle parameter.

The variation of the peak intensity may be caused by rotation of a non-spherical particle during the scattering measurement. By measuring the level of signal variation, a measure may be obtained relating to the level of uniformity of the particle shape.

The apparatus may further comprise:

a first polarizer between the light source and the measurement zone; and

a second polarizer between the measurement zone and the light detector, wherein the second polarizer has a first portion with a matching polarization to the first polarizer and a second portion with an orthogonal polarization to the first polarizer.

In this way, it becomes possible to determine the proportion of light which has undergone a polarization shift compared to light that has not undergone a polarization shift, and hence to differentiate between scattering amplitudes in the Mie scattering S-matrix, which in turn depends on the particle shape.

For example, the controller may be adapted to:

analyze the peak detected received light intensity through the first and second portions of the second polarizer to derive a particle shape parameter as a first further particle parameter; and

determine a particle density as a second further particle parameter.

The apparatus may further comprise:

an outer enclosure;

a fan connected to the outlet;

a filter arrangement coupled to a further pair of inlets; and

a flow deflector arrangement for controlling the flow from the filter arrangement and for controlling the flow path.

The filter arrangement is used to control the flow. For example, by suitable design of the filter arrangement the flow along the flow path may be controlled to introduce a single particle at a time into the measurement zone. This for example involves diluting the particle concentration introduced from the inlet by streams of clean air from the filter arrangement.

The filter arrangement may comprise first and second filters on opposite sides of the flow path, and the flow deflector arrangement comprises corresponding first and second flow deflectors.

The apparatus may be adapted to provide a uniform acceleration of the flow along the flow path within the measurement zone.

Examples in accordance with another aspect of the invention provide a method for obtaining characteristics, comprising:

generating an accelerating flow containing particles between an inlet and an outlet;

controlling a light source to provide light to a measurement zone of the flow path;

detecting light received from the measurement zone which has been scattered by the particles;

determining a time duration for which a particle remains in the measurement zone, and thereby determining an effective aerodynamic particle diameter;

determining a peak detected received light intensity and thereby determining an effective optical particle diameter; and

determining a further particle parameter relating to the shape and/or density of the particle.

This method makes use of a prolonged intensity measurement so that both time duration and intensity become significant, and this provides two measurements from a single optical analysis stage. An accelerating flow field ensures that particles of different aerodynamic sizes have different transit times in the measurement zone. This in turn enables more information than just a particle diameter to be derived.

The method may comprise:

determining the further particle parameter as a ratio between a particle shape parameter and a particle density.

The method may instead comprise:

analyzing a level of variation of the detected received intensity over time and thereby deriving a particle shape parameter as a first further particle parameter; and
determining a particle density as a second further particle parameter.

The method may instead comprise:

providing polarization of the light before the measurement zone using a first polarizer;
providing polarization of the light after the measurement zone using a second polarizer having a first portion with a matching polarization to the first polarizer and a second portion with an orthogonal polarization to the first polarizer;
analyzing the peak detected received light intensity through the first and second portions of the second polarizer to derive a particle shape parameter as a first further particle parameter; and
determining a particle density as a second further particle parameter.

The method maybe used to differentiate between different types of pollen, e.g. in an allergy detection device. The particles described in this disclosure may be pollen. The different particle characteristics may be used to differentiate between different types of pollen.

A filtered air flow may be provided towards the measurement zone thereby to control the flow path. This may be performed to focus the flow path, to generate the desired accelerating flow field and to dilute the particle number concentration in the flow from the inlet to ensure that a single particle passes the measurement zone at a time. A uniform acceleration of the flow along the flow path may for example be provided within the measurement zone.

The invention may be implemented at least in part in software.

BRIEF DESCRIPTION OF THE DRAWINGS

Examples of the invention will now be described in detail with reference to the accompanying drawings, in which:

Figure 1 shows a first possible way to obtain information relating to particles in addition to the particle diameter;
Figure 2 shows a second possible way to obtain information relating to particles in addition to the particle diameter;
Figure 3 shows a first example of a particle size determining apparatus and shows the parts relating to the optical system;
Figure 4 shows an example of the collected light intensity signal;
Figure 5 shows the parts of the apparatus relating to flow control;
Figure 6 shows the flow paths within the apparatus;
Figure 7 shows the velocity profile within the measurement zone;
Figure 8 shows the effect of particle density and hence the particle aerodynamic diameter on the velocity reached in the accelerating flow field;
Figure 9 shows the terminal velocity versus the particle diameter.
Figure 10 shows the sensitivity of the terminal velocity versus the particle diameter.
Figure 11 shows the pulse width versus the particle diameter.
Figure 12 shows the sensitivity of the pulse width versus the particle diameter;
Figure 13 shows a collected signal for a non-spherical particle;
Figure 14 shows a collected signal for a spherical particle;
Figure 15 shows an apparatus which uses polarization to enable determination of a shape parameter;
Figure 16 shows an example of the collected light intensity for a non-spherical particle using the apparatus of Figure 15;
Figure 17 shows parameters associated with the optical arrangement of Figure 3 and shows how decreasing the angle of incidence $\theta_{inc}$ can increase irradiance while maintaining the length of the measurement zone L; and
Figure 18 shows a method of determining particle characteristics.

DETAILED DESCRIPTION OF THE EMBODIMENTS

The invention provides an apparatus for determining particle characteristics, in which a flow path is generated containing particles to be analyzed, in which an accelerating flow is provided. A light detection system detects light received from a measurement zone which has been scattered by the particles. A time duration for which a particle remains in the measurement zone is measured to determine an effective aerodynamic particle diameter and a peak detected received light intensity is measured to determine an effective optical particle diameter. A further particle parameter is also obtained relating to the shape and/or density of the particle.

This approach enables more information than only a particle size to be obtained using a single-stage optical analysis system. The additional information may be used to characterize the particles more accurately.

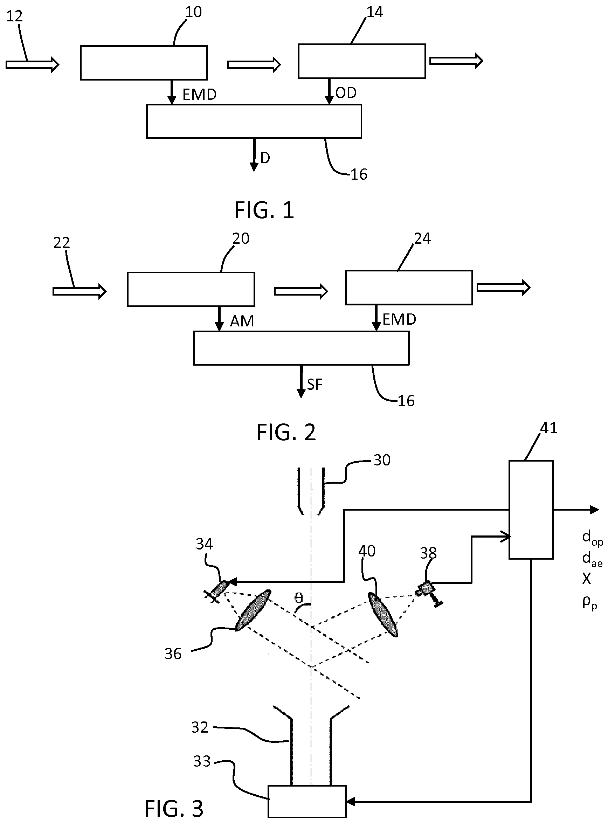

Figures 1 and 2 show examples of possible configurations for obtaining information additional to an equivalent diameter measurement.

Figure 1 shows how multiple measurements may be used in sequence to obtain a particle density measurement.

The system comprises a differential mobility analyzer 10 to which a sample flow 12 is provided. This provides an electrical mobility diameter EMD as its output. The flow passes to an optical particle counter 14 which provides an optical diameter OD as its output. The two outputs are processed by processor 16 which provides a density measurement D.

Figure 2 shows how multiple measurements may be used in sequence to obtain a shape factor (which is an indication of how far the shape deviates from a perfect sphere).

The system comprises an aerosol particle mass analyzer 20 to which a sample flow 22 is provided. This provides an aerosol mass AM as its output. The flow passes to a scanning mobility particle sizer 24 which provides an electrical mobility diameter EMD as its output. The two outputs are processed by processor 26 which provides a shape factor measurement SF.

A scanning mobility particle sizer essentially performs the same function as a differential mobility analyzer but it can also select particles with multiple electrical mobility values by changing the electric field intensity.

These approaches thus require complicated apparatus in order to enhance the basic measurement of effective diameter.

The invention is instead based on the use of a single optical stage with a wide light source beam such as a laser beam to measure particle optical diameter (based on the intensity of a pulse received by the photon detector) and particle transit time and/or terminal velocity (based on the width of the pulse) in a steady state accelerating flow field. By steady state is meant that the flow conditions are temporally constant, i.e. the flow has the constant velocity (and acceleration) at different points along the flow path over time.

A pre-defined relationship may be used to convert the transit time and/or terminal velocity to an effective aerodynamic diameter. The transit time is more easy to measure as it related directly to the signal width. The aerodynamic and optical diameters may then be processed to yield additional information about the particle, such as one or more of the particle density, shape factor, type and composition.

This additional information can thus be obtained without requiring multiple sensing instruments and enables portable sensors to obtain particle size, type and composition with reasonable accuracy in a quick and cost-effective manner.

The invention combines optical sensing with flow control.

Figure 3 shows the optical sensing features.

The optical apparatus comprises an inlet 30 which connects to the particle source. A flow path is defined to an outlet 32 which is connected to a negative pressure source 33 such as a fan, to control the flow.

A laser diode 34 provides an illumination beam, which is collimated by collimator lens 36 and then illuminates a length of the flow path. This length of the flow path defines a measurement zone. A photon detector 38 such as an avalanche photodiode collects scattered light after focusing by lens 40.

The photon detector signal is provided to a controller 41, which also controls the laser source 34 and the fan 33. The controller outputs the effective optical diameter $d_{op}$ the effective aerodynamic diameter $d_{ae}$ and one or more further parameters such as a shape factor $\chi$ and a density $\rho_p$ or a ratio of such values. It may also output an identification of the particle type by mapping the particle characteristics to known pollutants using a database.

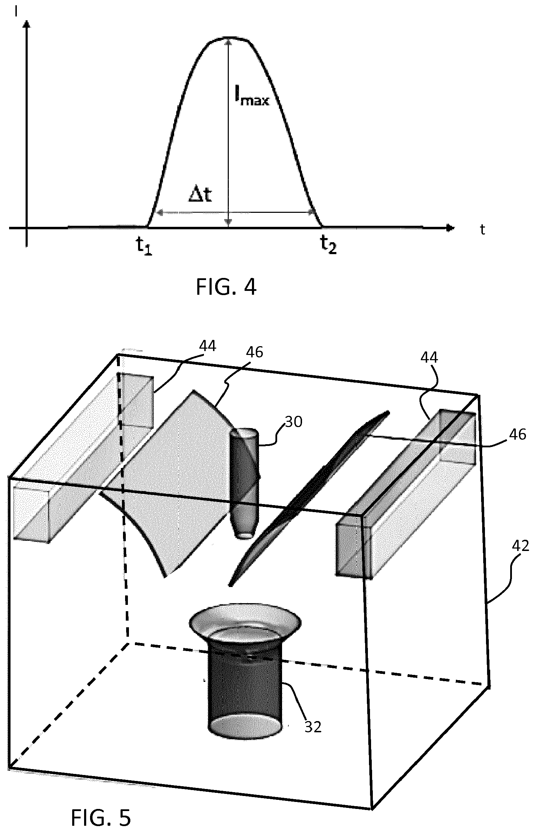

Figure 4 shows an example of a signal recorded by the photon detector 38 over time. The pulse relates to the transit of a single particle. It has a maximum intensity $I_{max}$ and a time duration $\Delta t$ between times $t_1$ and $t_2$.

The light is collected at a pre-defined angle. The light intensity signal of Figure 4 is converted to digital form using an analog to digital converter and recorded as a time series, within the controller 41.

Due to the constraints of laser power and analog to digital conversion resolution and signal to noise ratio, a low angle $\theta$ between the incident laser light and particle beam is used so that the laser power is concentrated into a small area but a sufficient length of illumination of the measurement zone is enabled. This is explained further below. The use of an avalanche photon detector enables an increase in the sensitivity of the scattered light intensity measurement.

The width of the pulse $\Delta t$ in Figure 4, i.e. the transit time, relates to the velocity of the particle in the laser beam, which is determined by the aerodynamic diameter of the particle, while the height of the signal $I_{max}$ represents the light intensity that is scattered off the particle, which is proportional to the optical diameter of the particle.

Thus, the single optical measurement provides multiple sources of information concerning the particle characteristics. In particular, by analyzing the two effective diameters, one or more of the particle density, shape factor and particle type can be determined.

Figure 5 shows the flow control apparatus.

It shows the inlet 30 and outlet 32 of Figure 3. The inlet is at atmospheric pressure, and the outlet is connected to the fan, such as a centrifugal fan (with a higher static pressure at low flow rate compared to a coaxial fan). The inlet and outlet pass into an enclosure 42, and filters 44 are provided within the enclosure, in particular on opposite sides of the flow channel.

The filters 44 are open to the exterior, so that they present a flow path from the outside to the inside of the enclosure 42. Thus, the flow out of the enclosure 42 is balanced by the flow in through the two filters and the flow through the inlet 30. The flow rate through the inlet 30, and thus the dilution rate of the incoming particle-laden air flow, depends on the characteristics of the filters, e.g. size, thickness, resistance coefficient etc.

Flow deflectors 46 are provided for shaping the flow streamlines to focus the particle trajectory from the inlet.

The design of the aerodynamic flow control apparatus part aims to generate a steady state accelerating flow field inside the measurement zone.

Particles with different aerodynamic diameter accelerate to different extent in an accelerating flow. This property is thus used to perform particle sizing with respect to aerodynamic diameter. Using a uniform flow field cannot achieve this goal, as all particles will settle to a same velocity profile in the measurement zone, and thus the same transit time.

The filters create a clean environment in the measurement zone to eliminate contamination by unwanted particles during light scattering measurements. This is especially helpful at each start-up of the system after it has been idle for a long time. They also dilute the incoming particle-laden air flow to ensure that, during any time, only one particle is present in the measurement zone (i.e. within the laser beam path). The dilution rate can be adjusted by changing the flow resistance (i.e. the material or thickness) of the filtration material.

The negative pressure induced by the fan 33 is set for example down to approximately -50 Pa.

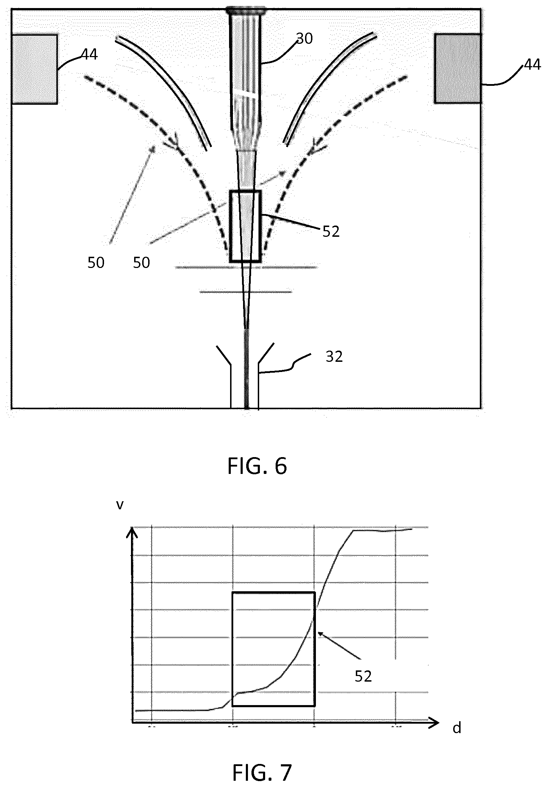

Figure 6 shows how the flow is controlled.

The flow has a reducing cross sectional area from the inlet 30 to the outlet 32, hence an increasing velocity along its axis. The air flow 50 through the filters 44 focuses the particle trajectory, and there is an acceleration towards the outlet 32 within the measurement zone 52 where the measurement takes place.

Figure 7 shows the flow velocity profile in the measurement zone 52, as a plot of velocity versus distance along the flow path.

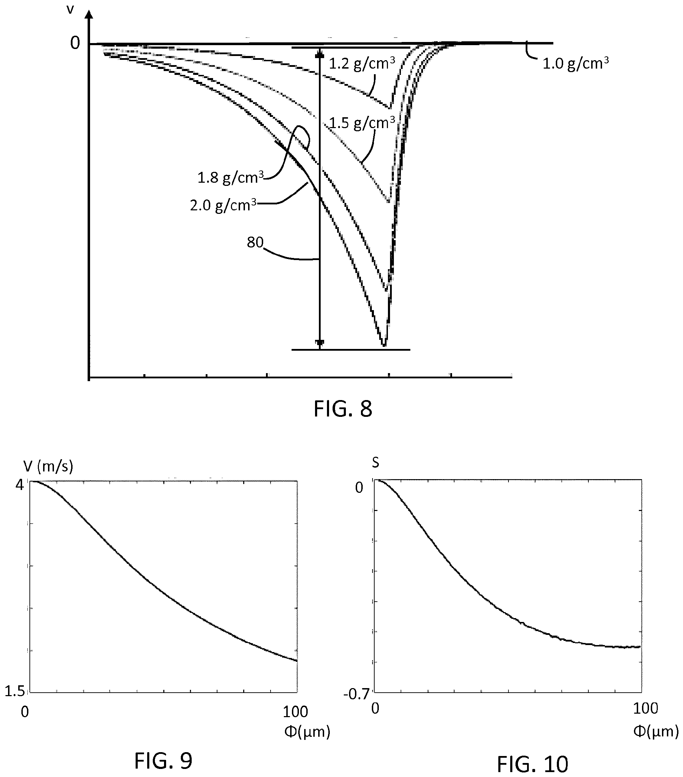

Figure 8 shows the effect of particle density (which correlates to the effective aerodynamic diameter) on the velocity reached within the acceleration zone 52. It shows the relative velocity versus the distance from the inlet nozzle for a set of different particle densities ranging from $1.0 \text{g/cm}^3$ to $2.0 \text{g/cm}^3$ for particles with identical diameter of $10\mu\text{m}$, and uses particles of density $1.0 \text{g/cm}^3$ as a baseline reference.

From this graph, the velocity difference with respect to the baseline can be determined (such as the vertical arrow 80 shown) at different distances from the inlet nozzle. The reference line (v=0) indicates the reference with particles having density $1 \text{g/cm}^3$, and thus is set to 0 at all distances.

The other plots show the velocity difference for particles with density 1.2, 1.5, 1.8 and $2.0 \text{g/cm}^3$ compared to the baseline reference. Larger particles accelerate more slowly than smaller particles, thus particles with higher density (i.e. larger aerodynamic diameter) have a more negative value as shown by arrow 80 for the most dense particle.

After the accelerating flow field, in the measurement zone, the velocity profile of the flow changes, so that the velocity differences then diminish and all particles settle in the flow field with the same terminal velocity. This is also shown in Figure 8.

As explained above, the total time a particle traverses the measurement zone (i.e. the width of the signal $\Delta t$ in Figure 4) is used to characterize the aerodynamic diameter of the particle. To estimate the potential accuracy and stability of this algorithm, a sensitivity analysis is performed for the two relationships (i) terminal velocity to particle aerodynamic diameter, and (ii) transit time (in the measurement zone) to particle aerodynamic diameter.

The sensitivity (x) can be defined as $[(dy/y) / (dx/x)] (x)$ for a relationship $y = f(x)$.

This sensitivity defines the ratio of percentage of change in y and percentage of change in x at different values of x. A high sensitivity means that a change in x will cause a prominent change in y. Thus by measuring y, a more accurate determination of the value of x can be obtained with less interference from noise.

The sensitivity analysis is performed for particles with aerodynamic diameter ranging from $1 \mu\text{m}$ to $100 \mu\text{m}$ in steps of $1 \mu\text{m}$ and a uniform density $1.5 \times 10^3 \text{ kg/m}^3$.

Figure 9 shows the terminal velocity v (m/s) versus the particle diameter ($\mu\text{m}$).

Figure 10 shows the sensitivity S (unitless) of the terminal velocity versus the particle diameter ($\mu\text{m}$).

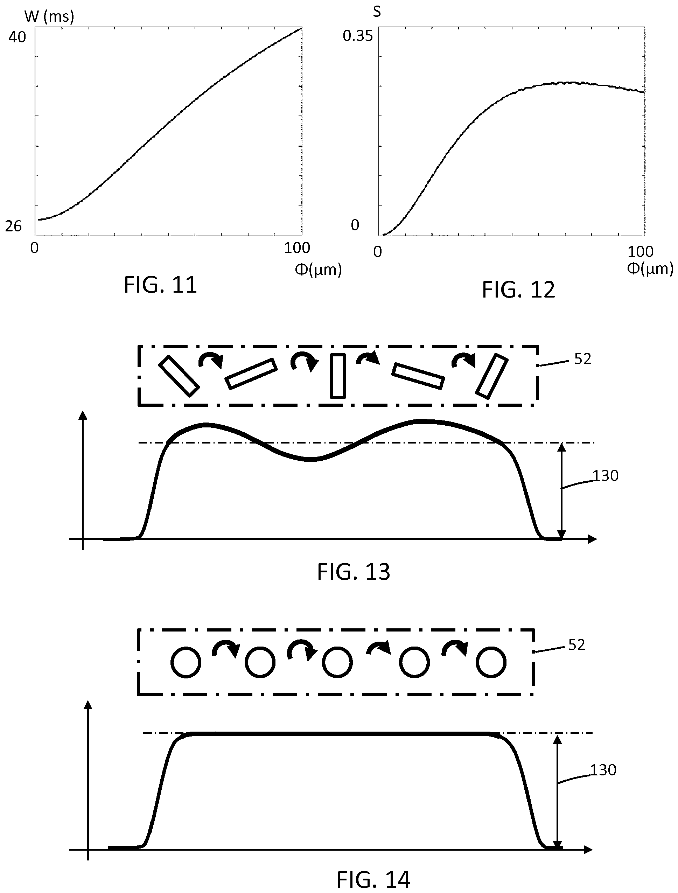

Figure 11 shows the pulse width W (ms) versus the particle diameter ($\mu\text{m}$).

Figure 12 shows the sensitivity S (unitless) of the pulse width versus the particle diameter ($\mu$m).

In Figure 10, the sensitivity of the relationship particle between the terminal velocity and particle aerodynamic diameter ranges from 0 to 0.5 (absolute value) with higher sensitivity for larger particles. The same conclusion can be drawn from Figure 12 where the sensitivity of the relationship between particle transit time and particle aerodynamic diameter ranges from 0 to 0.25, also with larger particles having higher sensitivity.

This sensitivity analysis shows that the use of particle transit time to characterize particle aerodynamic is feasible and more sensitive (giving a more accurate and stable estimation) for larger particles.

The nature of the movement of the particles in the flow can be analyzed based on the drag force experienced by the particles.

The drag force is given by:

$$F_{drag} = \frac{3\pi\eta V_{set} d_p}{C_c(d_p)} \tag{1}$$

For a particle of interest:

$$\rho_p \frac{\pi}{6} d_{op}{}^3 g = \frac{3\pi\eta V_{Set} d_{op}\chi}{C_c(d_{op})} \tag{2}$$

For a particle with standard density:

$$\rho_0 \frac{\pi}{6} d_{ae}{}^3 g = \frac{3\pi\eta V_{Set} d_{ae}}{C_c(d_{ae})} \tag{3}$$

These two relationships can be combined to yield:

$$d_{ae} = d_{op} \sqrt{\frac{1}{\chi} \frac{\rho_p}{\rho_0} \frac{C_c(d_{op})}{C_c(d_{ae})}} \tag{4}$$

$\rho_p$ is the particle density
po is the standard density
$\eta$ is the dynamic viscosity of air = 1.893 x $10^{-5}$ Pa·s
$\chi$ is the dynamic shape factor (1 for a sphere, <1 for streamlined shape, >1 for most aerosol particles)
$V_{set}$ is the settling velocity (the relative velocity of the particle with respect to the carrier flow)
$C_c(d_p)$ is slip correction factor, which has a known relationship with respect to $d_p$ and can be approximated to 1 for particles larger than 1 micrometer
$d_{op}$ is the optical diameter
$d_{ae}$ is the aerodynamic diameter
$d_p$ is the generic particle diameter value used in the generic drag equation.

There are different options for processing the recorded data.

In a most basic version, the height and width of the scattered signal of Figure 4 are measured, where the height of the signal is related to particle optical diameter, and the width of the signal (the transit time of the particle in the laser beam) is related to the particle aerodynamic diameter by the relationship shown in Figure 10.

After obtaining the optical and aerodynamic diameters, the value under the root sign of Equation (4) can be derived for a specific particle.

In addition, as Cc($d_{ae}$) and Cc($d_{op}$) have known relationship with dependent variable d (i.e. $d_{ae}$ and $d_{op}$) and are close to one for micron-sized particles, the ratio of density ($\rho_p$) and shape factor ($\chi$) can be calculated as a single number.

This most basic approach provides one additional parameter which combines density and shape factor. This may be used to provide particle differentiation in that different particles will have different values for this parameter.

In this basic version, the measured variables are the optical diameter (derived from peak intensity) and the aerodynamic diameter (derived from the transit time). These are outputs from the system.

$$\text{Known variables are } \rho_0 = 1\,\text{g/cm}^3,\ \text{Cc}(d_{op}) \approx 1,\ \text{Cc}(d_{ae}) \approx 1.$$

The calculated additional variable is the ratio of particle density ($\rho_p$) to shape factor ($\chi$). This is also provided as an output. The system can also output particle number concentration.

It would be more useful to be able to separate the particle density and shape information. Thus, in a more advance implementation, a particle shape factor may be obtained by analyzing a variation of the scattered light signal collected by the photon detector.

Figures 13 and 14 are used to explain a first approach.

Figure 13 shows a collected signal for a non-spherical particle. The orientation of the particle influences the scattered light intensity in the direction of the photon detector, and this manifests itself as a variation in the intensity level during the period of the signal corresponding to the central area of the measurement zone.

Figure 14 shows a collected signal for a spherical particle. The orientation of the particle does not influence the scattered light intensity in the direction of the photon detector, so the peak intensity has a period of constant amplitude. In each case, the peak intensity 120 recorded for the purposes of determining the effective optical diameter is the same.

A shape factor $\chi$ can then be evaluated and hence the particle density can be separated from the shape factor. The deviation of the signal of Figure 13 from a constant peak value may be obtained by any suitable statistical analysis, such as the peak deviation from the baseline level (shown dotted) or an area of deviation.

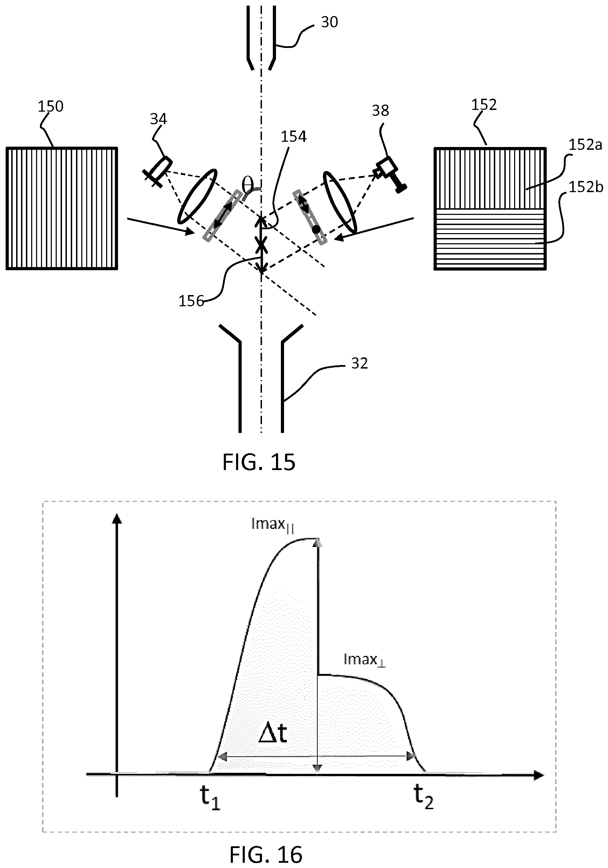

Figure 15 is used to explain a second approach.

The optical system is enhanced by providing a first polarizer 150 in the path of the laser beam, before the measurement zone, and a second polarizer 152 is provided in the path to the photon detector 38.

The second polarizer has two portions 152a, 152b with orthogonal polarization. The first part 154 of the path of the particle within the measurement zone is detected based on light which has passed through the first portion 152a, and the second part 156 of the path of the particle is detected based on light which has passed through the second portion 152b. In this example, the first portion has a polarization aligned with the first polarizer, and the second portion has a polarization orthogonal to the first polarizer.

Figure 16 shows an example of the collected light intensity for a non-spherical particle.

During a first part of the time period a light intensity is measured for light that has passed though aligned polarizers, with a maximum intensity shown as $I_{max\|}$. During a second part of the time period a light intensity is measured for light that has passed though crossed polarizers, with a maximum intensity shown as $I_{max\perp}$. In this case, only light that has undergone a polarization rotation between the polarizers can be collected.

For spherical particles, the scattered light will maintain its original polarization along each of the two orthogonal directions. For non-spherical particles, a portion of the scattered light will experience a change in polarization, hence yields a cross contribution of polarized components between the two orthogonal directions.

The two polarized components of the scattering field depend on the S-matrix

$$\begin{pmatrix} E_{\|s} \\ E_{\perp s} \end{pmatrix} = \frac{e^{ik(r-z)}}{-ikr} \begin{bmatrix} S_2 & S_3 \\ S_4 & S_1 \end{bmatrix} \cdot \begin{pmatrix} E_{\|i} \\ E_{\perp i} \end{pmatrix}$$

For spherical particles, $S_3 = S_4 = 0$, so that the two polarization components in the incident and scattered light will not interact. For non-spherical particles, $S3 = S4 \neq 0$, the two polarization components will interact. i.e. the parallel component in the incident light will contribute to both parallel and perpendicular components in scattered light.

A shape measure may be defined as:

$$P \equiv \frac{Imax_{\parallel} - Imax_{\perp}}{Imax_{\parallel} + Imax_{\perp}} = f(\chi)$$

For spherical particles, $I_{max\perp} = 0 \Rightarrow P = 1$. For non-spherical particles, $Imax_{\perp} > 0 \Rightarrow P < 1$.

Thus, the parameter P provides a measure of the shape of a particle from which an estimate is obtained for shape factor $\chi$ and hence the particle density can be separated from the shape factor.

In this approach, the measured variables are the optical diameter (based on the peak intensity), the aerodynamic diameter (based on the transit time) and the shape factor ($\chi$) (based on the shape of the intensity plot). These are outputs by the system.

The known variables are again po = 1 g/cm$^3$, Cc($d_{op}$) $\approx$ 1, Cc($d_{ae}$) $\approx$ 1.

The calculated variable is the particle density ($\rho_p$) which is also output from the system, again also with a particle count.

The retrieval of the aerodynamic diameter as well as the shape factor using either of these approaches requires a wide incident laser beam (of the order of millimeters or centimeters) compared to a typical narrow laser beam (of the order of micrometers).

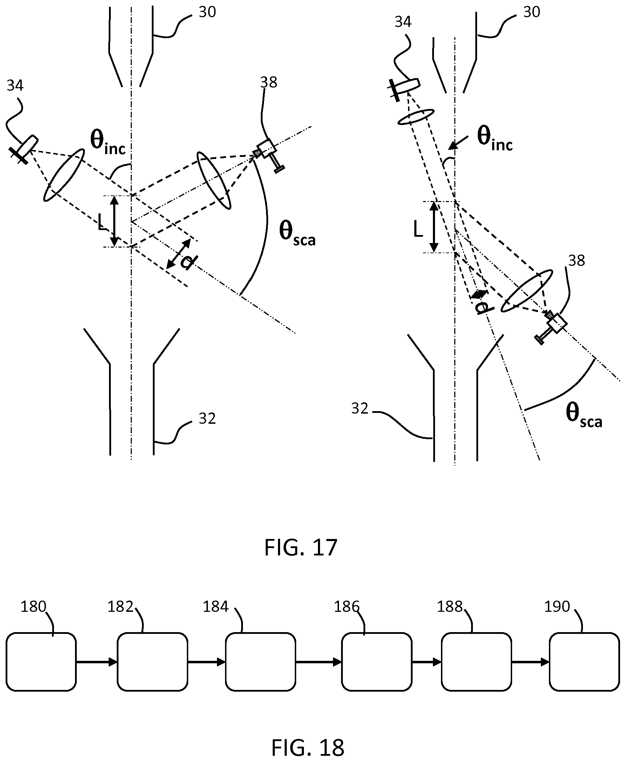

The left part of Figure 17 shows parameters associated with the optical arrangement of Figure 3, in particular the laser beam width d and the path length L in the measurement zone. The angle between the incident beam and the flow path is shown as $\theta_{inc}$. The scattering angle between the incident beam and the photon detector is shown as $\theta_{sca}$.

The right part of Figure 17 shows the effect of decreasing the angle of incidence.

For a given path length L and laser power, and beam width d can be decreased, so that the irradiance can be increased giving a higher signal to noise ratio.

The scattering angle $\theta_{sca}$ can also be decreased to increase the scattering intensity reaching the photon detector, as there is more forward scattering for particles with size larger than 0.5$\mu$m.

By way of example, preferred ranges for $\theta_{inc}$ are 15 to 25° such as 20°. Preferred ranges for $\theta_{sca}$ are 20 to 40° such as 30°. The length L has the order of centimeters, such as 2cm. A suitable range for d is L/3 to L/4.

The system will be calibrated with respect to:

The signal height to optical diameter relationship;
The signal width to aerodynamic diameter relationship;
The signal variation to shape factor relationship (when used); and
The parameter P to shape factor relationship (when used).

Figure 18 shows a method for obtaining particle characteristics, comprising:

in step 180, generating an accelerating flow containing particles between an inlet and an outlet;
in step 182, controlling a laser light source to provide light to a measurement zone of the flow path;
in step 184, detecting light received from the measurement zone which has been scattered by the particles;
in step 186, determining a time duration for which a particle remains in the measurement zone and thereby determining an effective aerodynamic particle diameter;
in step 188, determining a peak detected received light intensity and thereby determining an effective optical particle diameter; and
in step 190, determining a further particle parameter relating to the shape and/or density of the particle.

As discussed above, embodiments make use of a controller 41. The controller can be implemented in numerous ways, with software and/or hardware, to perform the various functions required. A processor is one example of a controller which employs one or more microprocessors that maybe programmed using software (e.g., microcode) to perform the required functions. A controller may however be implemented with or without employing a processor, and also maybe implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs). In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media maybe fixed within a processor or controller or maybe transportable, such that the one or more programs stored thereon can be loaded into a processor or controller.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. An apparatus for determining particle characteristics, comprising:

   a flow system (33) for generating a flow path between an inlet (30) and an outlet (32) along which an accelerating flow is to be provided containing particles to be analyzed;
   a light source (34) for providing light to a measurement zone of the flow path;
   a light detector (38) for detecting light received from the measurement zone which has been scattered by the particles; and
   a controller (41) for analyzing the detected received light,
   wherein the controller is adapted to:

      determine a time duration for which a particle remains in the measurement zone, and thereby determine an effective aerodynamic particle diameter;
      determine a peak detected received light intensity and thereby determine an effective optical particle diameter;
      determine a further particle parameter relating to the shape and/or density of the particle.

2. An apparatus as claimed in claim 1, wherein the controller (41) is adapted to:

   determine the further particle parameter as a ratio between a particle shape parameter and a particle density.

3. An apparatus as claimed in claim 1, wherein the controller (41) is adapted to:

   analyze a level of variation of the detected received intensity over time and thereby derive a particle shape parameter as a first further particle parameter; and
   determine a particle density as a second further particle parameter.

4. An apparatus as claimed in claim 1, further comprising:

   a first polarizer (150) between the light source and the measurement zone; and
   a second polarizer (152) between the measurement zone and the light detector, wherein the second polarizer has a first portion (152a) with a matching polarization to the first polarizer and a second portion (152b) with an orthogonal polarization to the first polarizer.

5. An apparatus as claimed in claim 4, wherein the controller (41) is adapted to:

   analyze the peak detected received light intensity through the first and second portions of the second polarizer to derive a particle shape parameter as a first further particle parameter; and
   determine a particle density as a second further particle parameter.

6. An apparatus as claimed in any preceding claim, further comprising:

   an outer enclosure (42);
   a fan (33) connected to the outlet (32);
   a filter arrangement (44) coupled to a further pair of inlets; and
   a flow deflector arrangement (46) for controlling the flow from the filter arrangement and for controlling the flow path.

7. An apparatus as claimed in claim 6, wherein the filter arrangement (44) comprises first and second filters on opposite sides of the flow path, and the flow deflector arrangement comprises corresponding first and second flow deflectors (46).

8. An apparatus as claimed in any preceding claim, adapted to provide a uniform acceleration of the flow along the flow path within the measurement zone.

9. A method for obtaining particle characteristics, comprising:

(180) generating an accelerating flow containing particles between an inlet and an outlet;
(182) controlling a light source to provide light to a measurement zone of the flow path;
(184) detecting light received from the measurement zone which has been scattered by the particles;
(186) determining a time duration for which a particle remains in the measurement zone and thereby determining an effective aerodynamic particle diameter;
(188) determining a peak detected received light intensity and thereby determining an effective optical particle diameter; and
(190) determining a further particle parameter relating to the shape and/or density of the particle.

10. A method as claimed in claim 9, comprising:

determining the further particle parameter as a ratio between a particle shape parameter and a particle density.

11. A method as claimed in claim 9, comprising:

analyzing a level of variation of the detected received intensity over time and thereby deriving a particle shape parameter as a first further particle parameter; and
determining a particle density as a second further particle parameter.

12. A method as claimed in claim 9, comprising:

providing polarization of the light between before the measurement zone using a first polarizer;
providing polarization of the light after the measurement zone using a second polarizer having a first portion with a matching polarization to the first polarizer and a second portion with an orthogonal polarization to the first polarizer;
analyzing the peak detected received light intensity through the first and second portions of the second polarizer to derive a particle shape parameter as a first further particle parameter; and
determining a particle density as a second further particle parameter.

13. A method as claimed in any one of claims 9 to 12, comprising providing a filtered air flow towards the measurement zone thereby to control the flow path.

14. A method as claimed in any one of claims 9 to 13, comprising providing a uniform acceleration of the flow along the flow path within the measurement zone.

15. A computer program comprising computer program code means which is adapted, when said computer program is run on a computer, to perform the method of any one of claims 9 to 14.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EBEN S. CROSS ET AL: "Laboratory and Ambient Particle Density Determinations using Light Scattering in Conjunction with Aerosol Mass Spectrometry", AEROSOL SCIENCE AND TECHNOLOGY, vol. 41, no. 4, 5 March 2007 (2007-03-05), pages 343-359, XP055170853, ISSN: 0278-6826, DOI: 10.1080/02786820701199736 * figure 2 * * "Introduction"; page 343 - page 344 * * "Operating Principles of the LS-AMS"; page 345 - page 346 * * "AMS apparatus", "Light Scattering Module","Time-of-Flight measurement", "Uncertainty in LS-AMS Density Measurement", "Overall Uncertainty in Particle Time-of-Flight and dva", "Uncertainty in Particle Size Determination Using Scattered Light Intensity" and "(i.) Non-Spherical Particles"; page 347 - page 349 * * "Measurement of Vacuum Aerodynamic Diameter (dva)"; page 350 * * "Determination of Particle Density"; page 353 * * "(iii.) Particle Non-Sphericity"; page 356 * ----- -/-- | 1-15 | INV. G01N15/02 G01N21/53 G01N15/14 |

TECHNICAL FIELDS
SEARCHED     (IPC)

G01N

The present search report has been drawn up for all claims

| Place of search | Date of completion of the search | Examiner |
|---|---|---|
| The Hague | 15 November 2017 | Lefortier, Stéphanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

# EUROPEAN SEARCH REPORT

Application Number

EP 17 16 7228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/039249 A1 (WANG XIAOLIANG [US] ET AL) 12 February 2009 (2009-02-12)<br>* figures 1,1A,2C,5,7A-7B *<br>* paragraphs [0019], [0023] *<br>* paragraph [0028] - paragraph [0030] *<br>* paragraph [0060] - paragraph [0062] *<br>* paragraphs [0065], [0067] *<br>* paragraph [0070] - paragraph [0071] *<br>* paragraph [0085] - paragraph [0096] *<br>* paragraph [0102] *<br>* paragraph [0117] - paragraph [0122] *<br>----- | 1-15 | |
| A | D.M MURPHY ET AL: "Particle density inferred from simultaneous optical and aerodynamic diameters sorted by composition",<br>JOURNAL OF AEROSOL SCIENCE,<br>vol. 35, no. 1,<br>26 August 2003 (2003-08-26), pages 135-139, XP055424218,<br>AMSTERDAM, NL<br>ISSN: 0021-8502, DOI: 10.1016/S0021-8502(03)00386-0<br>* page 136 - page 139 *<br>----- | 1-15 | |
| A | US 5 561 515 A (HAIRSTON PETER P [US] ET AL) 1 October 1996 (1996-10-01)<br>* column 5, line 65 - column 6, line 27 *<br>* column 11, line 48 - line 67 *<br>* column 14, line 26 - column 15, line 2 *<br>----- | 1-15 | |
| A | WO 2009/117028 A2 (L LIVERMORE NAT SECURITY LLC [US]; STEELE PAUL T [US]) 24 September 2009 (2009-09-24)<br>* abstract; figure 1 *<br>* paragraph [0024] - paragraph [0026] *<br>* paragraph [0029] - paragraph [0032] *<br>* paragraph [0055] - paragraph [0056] *<br>----- | 1-15 | |

TECHNICAL FIELDS
SEARCHED      (IPC)

The present search report has been drawn up for all claims

| Place of search | Date of completion of the search | Examiner |
|---|---|---|
| The Hague | 15 November 2017 | Lefortier, Stéphanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 392 644 A1**

## ANNEX TO THE EUROPEAN SEARCH REPORT
## ON EUROPEAN PATENT APPLICATION NO.

EP 17 16 7228

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2017

| Patent document cited in search report | Publication date | Patent family member(s) | Publication date |
|---|---|---|---|
| US 2009039249 A1 | 12-02-2009 | US 2009039249 A1<br>WO 2009021123 A1 | 12-02-2009<br>12-02-2009 |
| US 5561515 A | 01-10-1996 | NONE | |
| WO 2009117028 A2 | 24-09-2009 | US 2009262334 A1<br>US 2011304845 A1<br>WO 2009117028 A2 | 22-10-2009<br>15-12-2011<br>24-09-2009 |

EPO FORM P0459

For more details about this annex : see Official Journal of the European Patent Office, No. 12/82